# EUROPEAN PATENT SPECIFICATION

(11) **EP 4 005 808 B1**
(45) Date of publication and mention of the grant of the patent: **25.10.2023**
(21) Application number: 21211109.0
(22) Date of filing: 29.11.2021
(51) Int. Cl.: B41J 3/36, B41J 3/46, B41J 11/04

(54) **PRINTING UNIT AND PORTABLE TERMINAL**
DRUCKEINHEIT UND TRAGBARES ENDGERÄT
UNITÉ D'IMPRESSION ET TERMINAL PORTABLE

(30) Priority: 30.11.2020 JP 2020197975
(43) Date of publication of application: 01.06.2022
(73) Proprietor: Seiko Instruments Inc., Chiba-shi, Chiba 261-8507 (JP)
(72) Inventor: MIYAWAKI, Kouhei, Chiba-shi, 261-8507 (JP)
(74) Representative: Lewis Silkin LLP

(56) References cited:
- EP-A1- 0 535 840
- JP-A- 2004 262 017
- US-A1- 2008 198 217

## Description

### BACKGROUND OF THE INVENTION

### 1. Field of the Invention

The present invention relates to a printing unit and a portable terminal.

### 2. Description of the Related Art

EP 0 535 840 A1 discloses a printing system for printing characters/symbols on a tape-like member. The printing system includes a cassette for accommodating the tape-like member, a print head, a platen roller urged to contact said print head, and a feeding mechanism for feeding the tape-like member to pass through the nip between the print head and the platen roller. The platen roller consists of at least two roller members coaxially arranged one on another, respective one of the roller members being capable of being rotated independently.

A printing unit which has hitherto been known is configured to perform printing by heating a printing surface of a recording sheet with heating elements of a thermal head to develop a color on the printing surface while feeding the recording sheet through rotation of a platen roller under a state in which the recording sheet is nipped between the platen roller and the thermal head. The platen roller includes a gear at one end portion of a shaft. The platen roller is rotated through transmission of power of a motor mounted on a frame of the printing unit to the gear of the platen roller via a reduction gear.

Incidentally, in the related-art printing unit, a flange having a screw hole is provided on the motor, and the flange is fastened to the frame by screw. In this manner, the motor is fixed to the frame. Accordingly, the related-art printing unit has a room for improvement in view of achieving reduction in unit weight and reduction in manufacturing cost by reducing the number of parts through simplification of a structure of fixing the motor to the frame.

In view of the above, in this technical field, there have been demands for providing a printing unit having a motor fixing structure capable of reducing the number of parts, and a portable terminal including the printing unit.

### SUMMARY OF THE INVENTION

According to one aspect of the present invention, there is provided a printing unit according to claim 1.

Preferable features are set out in claims 2 to 8.

According to another aspect of the present invention, there is provided a portable terminal according to claim 9.

### BRIEF DESCRIPTION OF THE DRAWINGS

Embodiments of the present invention will now be described by way of further example only and with reference to the accompanying drawings, in which:
FIG. 1 is a perspective view for illustrating a portable terminal according to at least one embodiment of the present invention.
FIG. 2 is a perspective view for illustrating a printing unit according to a first embodiment of the present invention.
FIG. 3 is an exploded perspective view for illustrating the printing unit according to the first embodiment.
FIG. 4 is a perspective view for illustrating the printing unit according to the first embodiment.
FIG. 5 is a perspective view for illustrating a part of the printing unit according to the first embodiment when viewed from an upper rear side thereof.
FIG. 6 is a perspective view for illustrating a part of the printing unit according to the first embodiment when viewed from a lower rear side thereof.
FIG. 7 is a graph for showing a relationship between a hardness of an adhesive and a decrease amount of a separation resistance of the adhesive.
FIG. 8 is a perspective view for illustrating a printing unit according to a second embodiment of the present invention.
FIG. 9 is an exploded perspective view for illustrating the printing unit according to the second embodiment.
FIG. 10 is a perspective view for illustrating the printing unit according to the second embodiment.
FIG. 11 is a perspective view for illustrating a part of the printing unit according to the second embodiment when viewed from an upper rear side thereof.
FIG. 12 is a perspective view for illustrating a part of the printing unit according to the second embodiment when viewed from an upper rear side thereof.

### DESCRIPTION OF THE EMBODIMENTS

Now, an embodiment of the present invention is described with reference to the drawings. In the following description, components having the same or similar function are denoted by the same reference symbols. In some cases, overlapping description of the components is omitted.

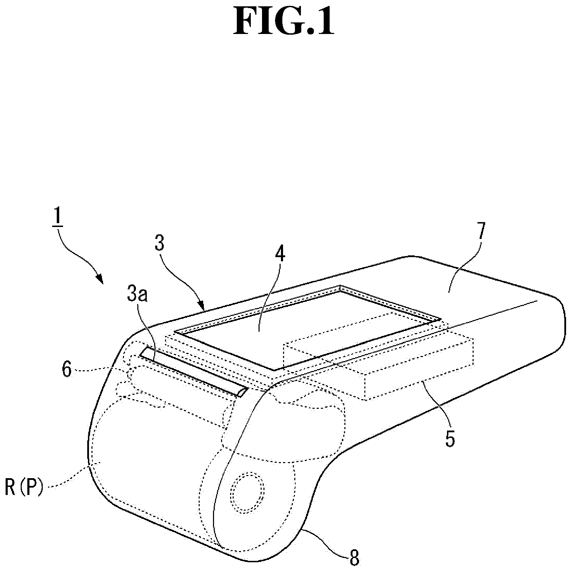

FIG. 1 is a perspective view for illustrating a portable terminal according to at least one embodiment of the present invention. As illustrated in FIG. 1, a portable terminal 1 is capable of performing printing on a recording sheet P. The recording sheet P is a heat sensitive sheet that develops a color when heat is applied thereto, and is used suitably for printing a variety of labels, receipts, and tickets. The recording sheet P is set in the portable terminal 1 in a state of a roll sheet R obtained by rolling the recording sheet P so as to have a hollow hole, and printing is performed on a part drawn from the roll sheet R.

The portable terminal 1 includes a casing 3, a display unit 4, a control unit 5, and a printing unit 6. The casing 3 formed into a hollow box-shape is made of a metal material or plastic such as ABS or a composite material of ABS and polycarbonate. The casing 3 includes a main body portion 7 having a rectangular parallelepiped shape, and a roll sheet receiving portion 8 formed at one end portion of the main body portion 7 in a longitudinal direction thereof so as to be bent toward one side of a thickness direction of the main body portion 7. The printing unit 6 is received at the one end portion of the main body portion 7 in the longitudinal direction. A discharge port 3a is formed in one end surface of the main body portion 7 in the longitudinal direction. The discharge port 3a is configured to discharge the recording sheet P printed by passing through the printing unit 6. The display unit 4 is arranged on a main surface of the main body portion 7, which faces the other side in the thickness direction. The display unit 4 is, for example, a liquid crystal panel. The display unit 4 is connected to the control unit 5, and is configured to display various kinds of information. The roll sheet receiving portion 8 is configured to receive the roll sheet R. The printing unit 6 is a so-called thermal printer.

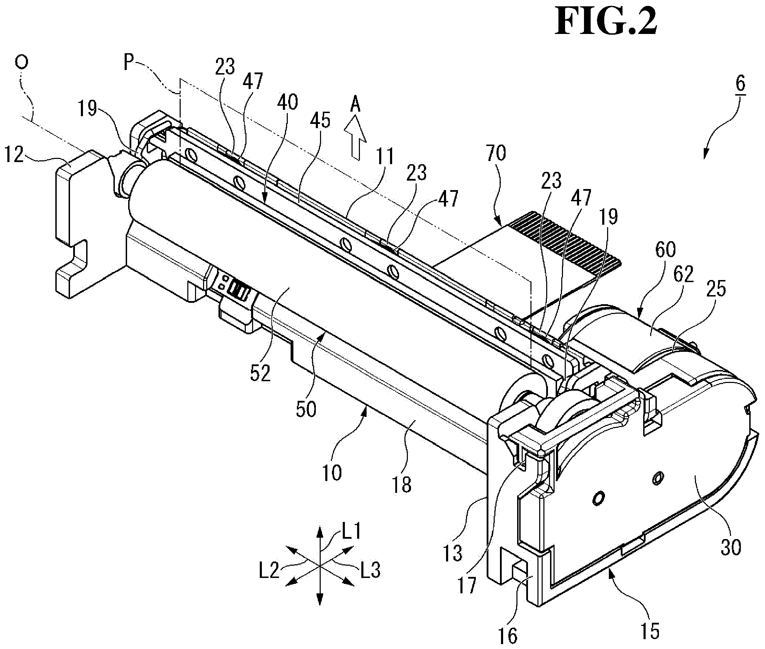

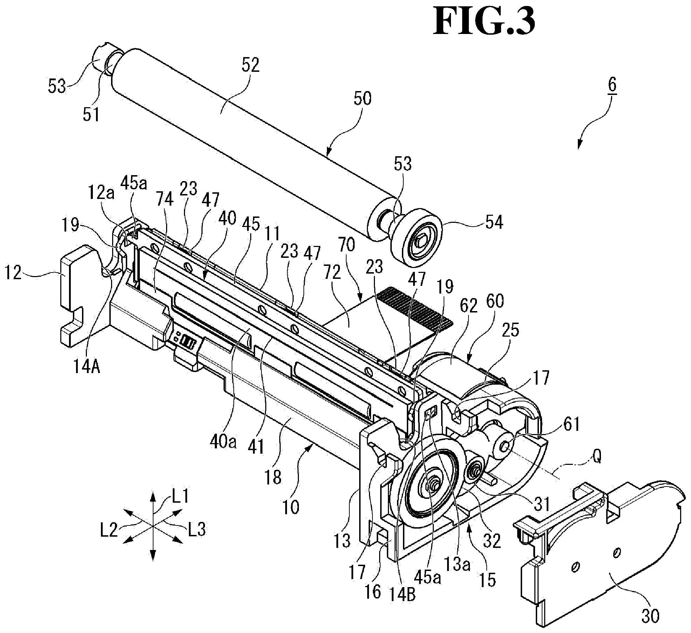

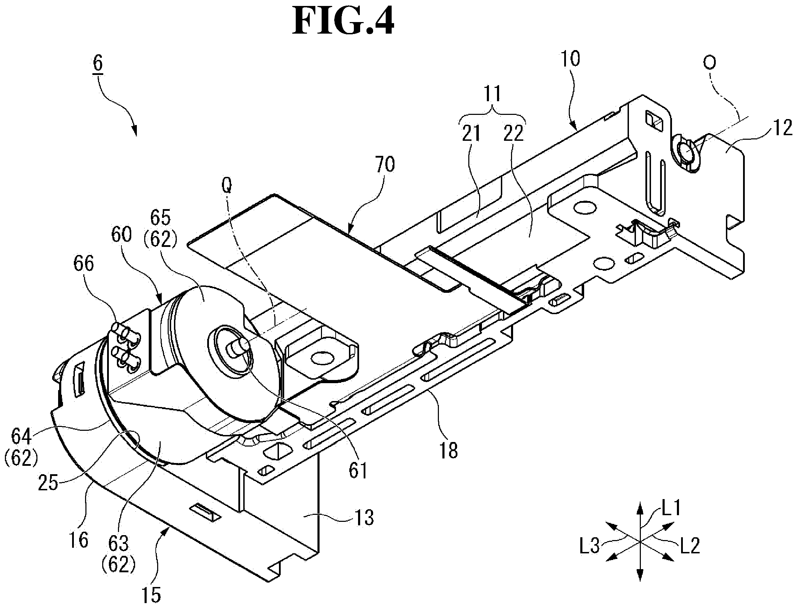

FIG. 2 and FIG. 4 are each a perspective view for illustrating a printing unit according to a first embodiment. FIG. 3 is an exploded perspective view for illustrating the printing unit according to the first embodiment. As illustrated in FIG. 2 to FIG. 4, the printing unit 6 includes a platen roller 50, a motor 60, a main body frame 10 (frame), a first reduction gear 31, a second reduction gear 32, a thermal head 40, and a head support member 45. The platen roller 50 includes a driven gear 54. The motor 60 is configured to rotate the platen roller 50 about a rotation axis O (predetermined axis). The main body frame 10 (frame) supports the platen roller 50 in a rotatable manner, and the motor 60 is fixed to the main body frame 10. The first reduction gear 31 and the second reduction gear 32 are configured to reduce a driving force of the motor 60 and transmit the driving force to the driven gear 54. The thermal head 40 is to be brought into press contact with an outer peripheral surface of the platen roller 50. The head support member 45 is supported on the main body frame 10, and the thermal head 40 is fixed to the head support member 45.

As illustrated in FIG. 2, the printing unit 6 is configured to discharge the recording sheet P passing between the platen roller 50 and the thermal head 40 in a direction indicated by an arrow A. Mainly in the description for the printing unit 6 below, a direction along the arrow A is defined as a vertical direction L1, and the direction indicated by the arrow A is defined as an upper side. Further, a direction which is orthogonal to the vertical direction L1 and matches a width direction of the recording sheet P is defined as a horizontal direction L2. In addition, a direction orthogonal to the vertical direction L1 and the horizontal direction L2 is defined as a fore-and-aft direction L3, and the platen roller 50 side with respect to the thermal head 40 in the fore-and-aft direction L3 is defined as a front side.

As illustrated in FIG. 3, the main body frame 10 is formed of, for example, a plate member such as a polycarbonate resin containing glass fibers. The main body frame 10 is formed into a U-shape opened toward the front side when viewed in the vertical direction L1. Specifically, the main body frame 10 includes a rear plate portion 11 extending in the horizontal direction L2, a first side wall portion 12 formed upright from one (left) end portion of the rear plate portion 11 in the horizontal direction L2 toward the front side, a second side wall portion 13 formed upright from another (right) end portion of the rear plate portion 11 in the horizontal direction L2 toward at least the front side, and a sheet guide portion 18 formed between the first side wall portion 12 and the second side wall portion 13.

As illustrated in FIG. 3 and FIG. 4, the rear plate portion 11 is formed into a plate shape having a thickness in the fore-and-aft direction L3. The rear plate portion 11 includes a thick plate portion 21 extending along an upper edge of the rear plate portion 11 in the horizontal direction L2, and a thin plate portion 22 extending below the thick plate portion 21 in the horizontal direction L2 so as to be adjacent to the thick plate portion 21. The thick plate portion 21 is formed to project further toward a rear side of the printing unit than the thin plate portion 22, and thus is thicker than the thin plate portion 22 in the fore-and-aft direction L3. The first side wall portion 12 is formed into a plate shape having a thickness in the horizontal direction L2. A portion of an upper edge of the first side wall portion 12 is cut downward to form a first roller insertion groove 14A. The second side wall portion 13 is formed into a plate shape having a thickness in the horizontal direction L2. A portion of an upper edge of the second side wall portion 13 is cut downward to form a second roller insertion groove 14B. The first roller insertion groove 14A and the second roller insertion groove 14B are formed so as to match each other when viewed in the horizontal direction L2. The platen roller 50 is removably inserted into the first roller insertion groove 14A and the second roller insertion groove 14B.

As illustrated in FIG. 3, the sheet guide portion 18 is formed into a columnar shape extending along the horizontal direction L2. One (left) end portion of the sheet guide portion 18 in the horizontal direction L2 is connected to an inner surface of the first side wall portion 12, and another (right) end portion of the sheet guide portion 18 in the horizontal direction L2 is connected to an inner surface of the second side wall portion 13.

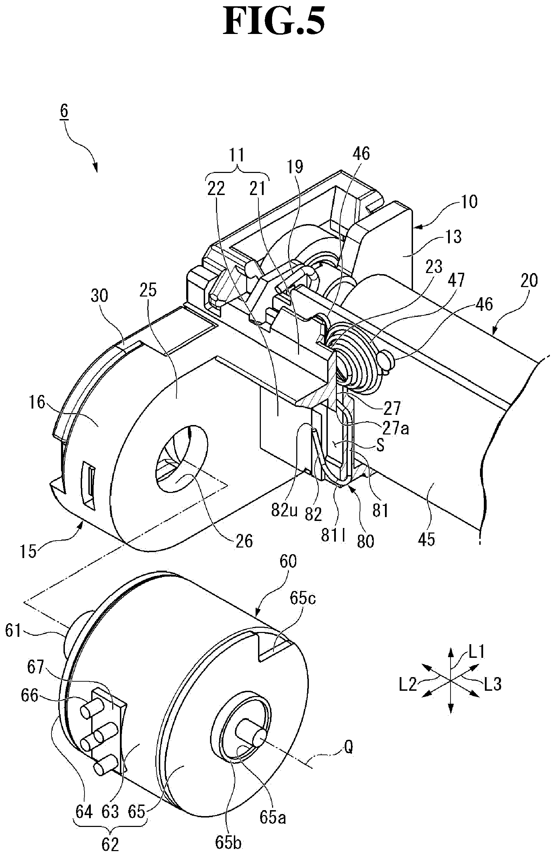

FIG. 5 is a perspective view for illustrating a part of the printing unit according to the first embodiment when viewed from an upper rear side thereof. In FIG. 5, an illustration of a flexible printed board 70 is omitted, and a partial cross section of the main body frame 10 is illustrated. Further, FIG. 5 is an illustration of a state in which the motor 60 is removed from the main body frame 10. As illustrated in FIG. 5, the rear plate portion 11 is arranged behind the head support member 45. A recessed portion 23 is formed in a surface (front surface) of the rear plate portion 11 facing the head support member 45 side, and is configured to receive an elastic member 47 to be described later. The recessed portion 23 is formed in the thick plate portion 21 of the rear plate portion 11. The recessed portion 23 is recessed rearward, and extends in the vertical direction L1 so as to be opened upward. The number of the recessed portions 23 to be formed (three in the first embodiment) is the same as that of the elastic members 47 (see FIG. 3).

The second side wall portion 13 includes a motor support portion 25. The motor support portion 25 is formed so as to be arranged on a side opposite to the platen roller 50 across at least any one of the rear plate portion 11 and the sheet guide portion 18 when viewed in the horizontal direction L2 (see FIG. 3). In the illustrated example, the motor support portion 25 is formed so as to be arranged on the side opposite to the platen roller 50 across the rear plate portion 11 when viewed in the horizontal direction L2. That is, the motor support portion 25 is formed behind the rear plate portion 11 when viewed in the horizontal direction L2. An inner surface of the motor support portion 25 in the horizontal direction L2 serves as a bonding surface to which the motor 60 is to be bonded, and is formed into a flat surface shape orthogonal to the horizontal direction L2. The motor support portion 25 has a through-hole 26 through which an output shaft 61 of the motor 60 is to be inserted. The through-hole 26 is a circular hole having a center on an output axis Q of the motor 60.

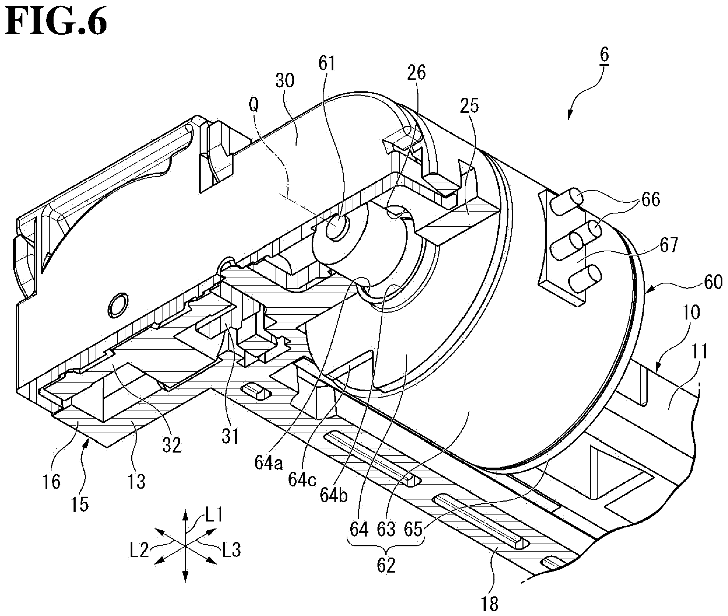

FIG. 6 is a perspective view for illustrating a part of the printing unit according to the first embodiment when viewed from a lower rear side thereof. In FIG. 6, the illustration of the flexible printed board 70 is omitted, and cross sections of components other than the motor 60, which are taken along the horizontal direction L2 and the fore-and-aft direction L3, are illustrated. As illustrated in FIG. 6, the motor 60 is arranged on an inner side of the motor support portion 25 in the horizontal direction L2. With this configuration, the motor 60 is arranged on the side opposite to the platen roller 50 across the rear plate portion 11 (see also FIG. 5). The motor 60 generates torque about the output axis Q. The motor 60 is arranged so that the output axis Q is parallel to the rotation axis O of the platen roller 50. The motor 60 is arranged at a distance from the main body frame 10 except for the bonding surface of the motor support portion 25. Moreover, the entire motor 60 is arranged at a distance from the casing 3 of the portable terminal 1.

The motor 60 includes a stator (not shown), a rotor (not shown), a housing 62 configured to receive the stator and the rotor, and the output shaft 61 protruding from the housing 62 along the output axis Q. The housing 62 includes a cylindrical portion 63, a first flange 64, and a second flange 65. The cylindrical portion 63 extends in the horizontal direction L2, and surrounds the stator from an outer peripheral side of the stator. The first flange 64 closes an opening of the cylindrical portion 63 on the motor support portion 25 side. he second flange 65 closes an opening of the cylindrical portion 63 on a side opposite to the first flange 64.

The cylindrical portion 63 is formed into a cylindrical shape having a center on the output axis Q. The first flange 64 is formed into a disk shape having a thickness in the horizontal direction L2. The first flange 64 includes a shaft hole 64a, a cylindrical boss 64b, and a notch 64c. The shaft hole 64a is formed in a center of the first flange 64. The shaft hole 64a is a circular hole having a center on the output axis Q. The output shaft 61 is inserted through the shaft hole 64a. The cylindrical boss 64b protrudes from an opening edge of the shaft hole 64a toward an outer side in an axial direction of the motor 60. The cylindrical boss 64b is formed into a cylindrical shape having a center on the output axis Q. The cylindrical boss 64b is inserted into the through-hole 26 of the motor support portion 25. An outer diameter of the cylindrical boss 64b is substantially the same as an inner diameter of the through-hole 26 of the motor support portion 25. An outer peripheral surface of the cylindrical boss 64b is held in close contact with an inner peripheral surface of the through-hole 26 of the motor support portion 25 over an entire periphery of the cylindrical boss 64b. With this configuration, the motor 60 is fixed to the motor support portion 25 so as to be non-displaceable in the vertical direction L1 and the fore-and-aft direction L3. The notch 64c is formed in an outer peripheral edge of the first flange 64. The second flange 65 is formed to have the same shape and size as those of the first flange 64. That is, the second flange 65 includes a shaft hole 65a, a cylindrical boss 65b, and a notch 65c (see FIG. 5). However, a shape of the second flange 65 is not particularly limited. It is only preferred that the second flange 65 include a shaft hole through which the output shaft 61 can be inserted.

The motor 60 is fixed to the motor support portion 25 with an adhesive. The adhesive is applied to entire opposed surfaces of the first flange 64 of the motor 60 and the motor support portion 25. In the first embodiment, the adhesive is applied to an entire main surface of the first flange 64 of the motor 60 facing the motor support portion 25 side. Accordingly, with the adhesive, the motor 60 is fixed to the motor support portion 25 so as to be non-displaceable in the fore-and-aft direction L3, the vertical direction L1, and the horizontal direction L2. The adhesive is a one-component adhesive. Before curing of the adhesive, a viscosity of the adhesive is equal to or higher than 40 Pa·s and equal to or lower than 110 Pa·s in an environment at a temperature of 23°C and a humidity of 50%. After curing of the adhesive, a hardness of the adhesive is equal to or higher than Shore A15 and equal to or lower than Shore A60. A time period for forming a coating of the adhesive is equal to or longer than 4 minutes and equal to or shorter than 25 minutes. However, the adhesive is not limited to an adhesive having the characteristics described above.

The motor 60 includes terminals 66 and a terminal seat 67. The terminal seat 67 protrudes from an outer peripheral surface of the cylindrical portion 63 of the housing 62 toward the outer side of the motor 60. The terminals 66 protrude from the terminal seat 67 toward the outer side of the motor 60. The flexible printed board 70 is connected to the terminals 66 (see FIG. 4). The motor 60 is electrically connected to the control unit 5 (see FIG. 1) via the flexible printed board 70. The motor 60 is configured to be driven based on a signal from the control unit 5.

As illustrated in FIG. 3, a gearbox portion 15 is formed on an outer side of the second side wall portion 13. The gearbox portion 15 includes a peripheral wall portion 16 formed to extend upright from a peripheral edge of the second side wall portion 13 toward the outer side in the horizontal direction L2. That is, the gearbox portion 15 is formed of the second side wall portion 13 and the peripheral wall portion 16, and is opened toward the outer side in the horizontal direction L2. The peripheral wall portion 16 is opened upward when viewed in the horizontal direction L2. The peripheral wall portion 16 includes a pair of locking recessed portions 17 formed so as to be recessed downward. The pair of locking recessed portions 17 is formed on both front and rear sides of an upper opening of the peripheral wall portion 16, respectively. A gear cover 30 is engaged with the pair of locking recessed portions 17. The gear cover 30 covers an inner side of the gearbox portion 15 from an outer side thereof in the horizontal direction L2.

The first reduction gear 31 and the second reduction gear 32 are assembled inside the gearbox portion 15 so as to be rotatable. The first reduction gear 31 meshes with the output shaft 61 of the motor 60. The second reduction gear 32 meshes with the first reduction gear 31.

The thermal head 40 is configured to perform printing on the recording sheet P (see FIG. 2). The thermal head 40 is formed into a rectangular shape having its longitudinal direction defined as the horizontal direction L2 when viewed in the fore-and-aft direction L3. The thermal head 40 is arranged under a state in which a thickness direction of the thermal head 40 matches the fore-and-aft direction L3. On a head surface 40a of the thermal head 40, a large number of heating elements 41 are arrayed in the horizontal direction L2.

The head surface 40a is opposed to a printing surface of the recording sheet P, and the recording sheet P may be nipped between the head surface 40a and the outer peripheral surface of the platen roller 50. The thermal head 40 is connected to the control unit 5 (see FIG. 1) through intermediation of the flexible printed board 70. A driver IC (not shown) mounted on the thermal head 40 is configured to control heat generation of the heating elements 41 based on the signal from the control unit 5. Through the control of the heat generation of the heating elements 41, the thermal head 40 prints, for example, various kinds of letters and figures on the printing surface of the recording sheet P. The thermal head 40 is fixed by being bonded onto the head support member 45.

The head support member 45 is arranged in front of the rear plate portion 11, behind the sheet guide portion 18, and between the first side wall portion 12 and the second side wall portion 13. The head support member 45 is made of a metal material. The head support member 45 is a plate-like member having its longitudinal direction defined as the horizontal direction L2. The head support member 45 is arranged under a state in which a thickness direction of the head support member 45 matches the fore-and-aft direction L3. The thermal head 40 is fixed to a front surface of the head support member 45.

A pair of stoppers 45a configured to regulate a pivot range of the head support member 45 are formed at upper end portions of the head support member 45. Each of the pair of stoppers 45a is formed in substantially a quadrangular prism shape and extends outward in the horizontal direction L2 of the head support member 45. The pair of stoppers 45a are inserted into a hole portion 12a formed in an upper part of the first side wall portion 12 of the main body frame 10 and a hole portion 13a having a rectangular shape formed in an upper part of the second side wall portion 13. The stoppers 45a are movable inside the hole portions 12a and 13a, respectively, along with the pivot of the head support member 45, and may be brought into contact with inner wall surfaces of the hole portions 12a and 13a, respectively. Through the contact of the stoppers 45a with the inner wall surfaces of the hole portions 12a and 13a, the pivot amount of the head support member 45 is regulated.

As illustrated in FIG. 5, projecting portions 46 are formed on a surface (rear surface) of the head support member 45 facing the rear plate portion 11 side. Each pair of the projecting portions 46 is provided at a position adjacent to the recessed portion 23 of the rear plate portion 11. The pair of projecting portions 46 are arranged with an interval in the horizontal direction L2 so as to sandwich a center of an upper end opening of the recessed portion 23 when viewed from the rear side. The interval between the pair of projecting portions 46 is smaller than a width of the elastic member 47 in the horizontal direction L2.

Each of the elastic members 47 is interposed between the head support member 45 and the rear plate portion 11. The elastic member 47 is configured to urge the head support member 45 and the rear plate portion 11 so as to separate the head support member 45 and the rear plate portion 11 from each other. That is, the elastic member 47 is configured to always press the head support member 45 toward the front side. In the illustrated example, the elastic member 47 is a conical spring reduced in diameter from the front side toward the rear side. A rear end portion of the elastic member 47 is inserted into the recessed portion 23 of the rear plate portion 11. A front end portion of the elastic member 47 is brought into abutment against the rear surface of the head support member 45, and upward movement of the elastic member 47 is regulated by the projecting portions 46. The plurality of (three in the first embodiment) elastic members 47 are arrayed with intervals in the horizontal direction L2 (see FIG. 3).

As illustrated in FIG. 2, the platen roller 50 is arranged so as to be opposed to the thermal head 40 under a state in which the rotation axis O matches the horizontal direction L2. The platen roller 50 is rotated about the rotation axis O under a state in which the recording sheet P is nipped between the platen roller 50 and the thermal head 40, to thereby convey the recording sheet P in the direction indicated by the arrow A.

As illustrated in FIG. 3, the platen roller 50 includes a roller shaft 51, a roller main body 52 mounted on the roller shaft 51, and a pair of bearings 53 mounted at both ends of the roller shaft 51. The roller shaft 51 is formed slightly longer than the separation distance between the first side wall portion 12 and the second side wall portion 13 of the main body frame 10. The roller main body 52 is made of, for example, rubber, and is arranged along the horizontal direction L2 uniformly over the entire region excluding portions corresponding to both the ends of the roller shaft 51.

As illustrated in FIG. 2 and FIG. 3, the pair of bearings 53 of the platen roller 50, which are mounted on both ends thereof, are inserted into the first roller insertion groove 14A and the second roller insertion groove 14B of the main body frame 10, respectively. The bearings 53 are held in the first roller insertion groove 14A and the second roller insertion groove 14B by locking springs 19 supported on the main body frame 10. With this configuration, the platen roller 50 is held so as to be rotatable relative to the main body frame 10. Further, when the locking springs 19 are elastically deformed in order to insert and remove the bearings 53 into and from the first roller insertion groove 14A and the second roller insertion groove 14B, the platen roller 50 is mountable to and removable from the main body frame 10. Under a state in which the platen roller 50 is inserted into the first roller insertion groove 14A and the second roller insertion groove 14B, the platen roller 50 is arranged so that the roller main body 52 is brought into contact with the thermal head 40 through intermediation of the recording sheet P drawn out from the roll sheet R (see FIG. 1).

As illustrated in FIG. 3, the driven gear 54 is fixed on another (right) end portion of the platen roller 50 in the horizontal direction L2. The driven gear 54 is assembled to an upper part of the gearbox portion 15 when the platen roller 50 is held on the first side wall portion 12 and the second side wall portion 13. The driven gear 54 meshes with the second reduction gear 32. With this, a rotational driving force from the motor 60 is transmitted to the driven gear 54 via the first reduction gear 31 and the second reduction gear 32. The platen roller 50 is rotated under a state of being held on the first side wall portion 12 and the second side wall portion 13, thereby being capable of conveying the recording sheet P (see FIG. 2).

As illustrated in FIG. 5, the printing unit 6 further includes a conducting member 80. The conducting member 80 is brought into contact with the housing 62 of the motor 60, and provides conduction between the housing 62 and the head support member 45. A part of the conducting member 80 is arranged in a contact space S between the motor 60 and the main body frame 10. The contact space S is defined in front of the housing 62 of the motor 60 and behind the rear plate portion 11 of the main body frame 10. A rear side of the contact space S is defined by the housing 62 of the motor 60, and a front side of the contact space S is defined by a rear surface of the thin plate portion 22 of the rear plate portion 11.

The contact space S linearly communicates with, through a communication portion 27, an outside of an assembly including the main body frame 10 and the head support member 45. The communication portion 27 linearly passes through the thick plate portion 21 of the rear plate portion 11 along the vertical direction L1, and is opened toward an outer side of the assembly including the main body frame 10 and the head support member 45. An upper portion of the communication portion 27 matches the recessed portion 23. With this configuration, the contact space S communicates with the recessed portion 23 through a part of the communication portion 27. The upper portion of the communication portion 27 is formed between the thick plate portion 21 of the rear plate portion 11 and the head support member 45, and a lower portion of the communication portion 27 is formed in the thick plate portion 21 of the rear plate portion 11.

The conducting member 80 is made of a material having conductivity. In the first embodiment, the conducting member 80 is formed of a metal wire. The conducting member 80 is electrically connected to the head support member 45. The conducting member 80 is mechanically connected to one of the elastic members 47, and is electrically connected to the head support member 45 via the one of the elastic members 47. In the first embodiment, the conducting member 80 is integrated with the one of the elastic members 47. The conducting member 80 is held in press contact with the housing 62 of the motor 60 in the contact space S by a restoring force accompanied with elastic deformation. The conducting member 80 extends from the contact space S to the communication portion 27 toward the outside of the assembly including the main body frame 10 and the head support member 45. The conducting member 80 is connected to the one of the elastic members 47 at the upper portion of the communication portion 27 (recessed portion 23).

A specific shape of the conducting member 80 is described in detail. The conducting member 80 includes a base portion 81 and a contact portion 82. The base portion 81 is arranged over a region from the communication portion 27 to the contact space S. The contact portion 82 is brought into contact with the housing 62 of the motor 60 in the contact space S. The base portion 81 extends downward from a rear end portion of the one of the elastic members 47. The contact portion 82 extends upward and rearward from a lower end portion 811 of the base portion 81. An upper end portion 82u of the contact portion 82 is located behind and below an opening of the communication portion 27 on the contact space S side. With this configuration, the contact portion 82 is locked to an opening edge 27a of the communication portion 27 on the contact space S side, thereby preventing the conducting member 80 from falling out of the communication portion 27. Further, the projecting portions 46 of the head support member 45 regulate upward movement of the one of the elastic members 47 mechanically connected to the conducting member 80, thereby preventing the conducting member 80 from falling out of the communication portion 27.

A method of assembling the conducting member 80 is described. The conducting member 80 is configured to be assemblable to the main body frame 10 at a predetermined position under a state in which the motor 60 is fixed to the main body frame 10 with the adhesive. Specifically, the lower end portion 811 of the base portion 81 of the conducting member 80 is inserted into the communication portion 27 from the upper side so as to pass through the communication portion 27. At this time, the conducting member 80 is bent so that the upper end portion 82u of the contact portion 82 is brought closer to the base portion 81. In this manner, an outer shape of the conducting member 80 is reduced when viewed in an extending direction (vertical direction L1) of the communication portion 27, thereby being capable of allowing the contact portion 82, together with the base portion 81, to pass through the communication portion 27. When the contact portion 82 passes through the communication portion 27, the conducting member 80 is restored, and thus the contact portion 82 is displaced rearward and brought into contact with the housing 62 of the motor 60.

When the conducting member 80 is inserted into the communication portion 27, the one of the elastic members 47 connected to the conducting member 80 is inserted into the recessed portion 23. Specifically, the one of the elastic members 47 in a compressed state is inserted into the recessed portion 23 from the upper side, and is caused to climb over the projecting portions 46. When the one of the elastic members 47 climbs over the projecting portions 46, the one of the elastic members 47 is engaged with the projecting portions 46 from the lower side. In the manner described above, the one of the elastic members 47 and the conducting member 80 can be assembled at a predetermined position.

As described above, in the printing unit 6 according to the first embodiment, the motor 60 is fixed to the main body frame 10 with the adhesive. With this configuration, the motor 60 can be fixed to the main body frame 10 without a fastening member such as a screw. Therefore, the printing unit 6 can be provided, which has the motor fixing structure reduced in the number of parts as compared to that of the related-art printing unit.

The viscosity of the adhesive is equal to or higher than 40 Pa·s and equal to or lower than 110 Pa·s in an environment at a temperature of 23°C and a humidity of 50%. With this configuration, there can be suppressed degradation of application accuracy, which may be caused when a high-viscosity adhesive is used, and leakage of an adhesive, which may be caused when a low-viscosity adhesive is used. Therefore, the printing unit 6 having high quality can be provided.

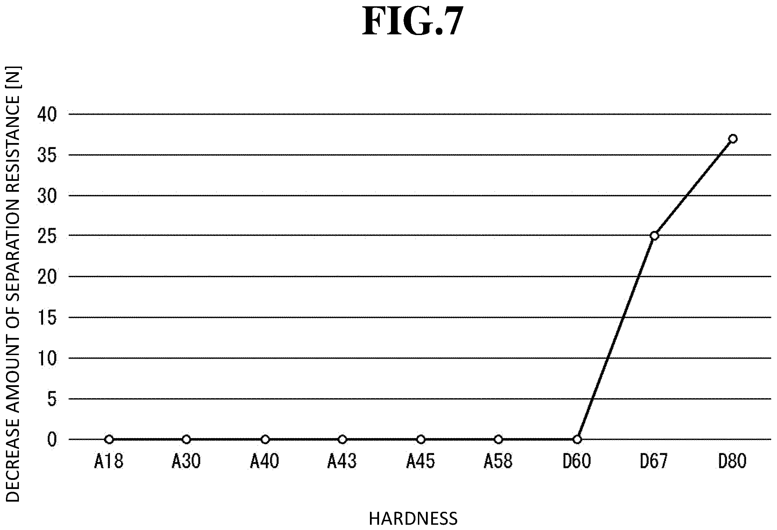

Incidentally, when the hardness of the adhesive is relatively high, due to an impact applied at the time of a drop of the printing unit 6 to the motor 60 being a heavy component, a crack may be formed in the adhesive. FIG. 7 is a graph for showing a relationship between the hardness of the adhesive and a decrease amount of a separation resistance of the adhesive. The decrease amount of the separation resistance is a decrease amount corresponding to a difference of forces required to separate the motor 60 from the motor support portion 25 between before and after application of a drop impact of 1,000 G to the motor 60 due to the drop of the printing unit 6. As shown in FIG. 7, it is understood that, in a case in which the hardness of the adhesive is equal to or higher than Shore A15 and equal to or lower than one of Shore A58 and Shore D60, even when the drop impact of 1,000 G is applied to the motor 60, the separation resistance of the adhesive does not decrease. The Shore D60 hardness is satisfactorily higher than the Shore A58 hardness. Therefore, according to the first embodiment, a crack can be prevented from being formed in the adhesive due to the drop impact of the printing unit 6. Therefore, the printing unit 6 having high durability can be provided.

The time period for forming the coating of the adhesive is equal to or longer than 4 minutes and equal to or shorter than 25 minutes. With this configuration, when 4 minutes or longer is secured for the time period for forming the coating, after the adhesive is applied to the plurality of main body frames 10 or the plurality of motors 60 together in a step of manufacturing the printing unit 6, the motor 60 can be bonded to the main body frame 10. Further, when the time period for forming the coating is set to 25 minutes or shorter, the main body frame 10 to which the motor 60 is bonded can be promptly transferred to a next step. Therefore, the printing unit 6 excellent in productivity can be provided.

The main body frame 10 and the conducting member 80 are configured to be assemblable to each other under the state in which the motor 60 is fixed to the main body frame 10 with the adhesive. In a configuration in which it is required that the main body frame and the conducting member be assembled to each other before the motor 60 is fixed to the main body frame, after the motor 60 is bonded to the main body frame with the adhesive, the motor 60 is displaced by a contact pressure of the conducting member applied to the motor 60 before curing of the adhesive, and thus the motor 60 may be misaligned with respect to the main body frame. According to the first embodiment, the main body frame 10 and the conducting member 80 can be assembled to each other after curing of the adhesive, thereby being capable of suppressing misalignment of the motor 60 with respect to the main body frame 10. Therefore, the printing unit 6 having high quality can be provided.

Between the main body frame 10 and the motor 60, the housing 62 of the motor 60 defines the contact space S in which the conducting member 80 is to be arranged. In the assembly including the main body frame 10 and the head support member 45 of the thermal head 40, the communication portion 27 is formed, and is configured to linearly communicate the contact space S and the outside of the assembly with each other. The conducting member 80 is to be inserted through the communication portion 27. With this configuration, when the conducting member 80 is linearly inserted through the communication portion 27 from the outer side of the assembly including the main body frame 10 and the head support member 45, a part of the conducting member 80 can be arranged in the contact space S and brought into contact with the housing 62 of the motor 60. Therefore, the conducting member 80 can be assembled to the main body frame 10 under the state in which the motor 60 is fixed to the main body frame 10.

The printing unit 6 includes the opening edge 27a of the communication portion 27 and the projecting portions 46 configured to prevent falling of the conducting member 80. With this configuration, conduction between the housing 62 of the motor 60 and the head support member 45 of the thermal head 40 can be prevented from being cancelled along with falling of the conducting member 80. Therefore, reliability of the printing unit 6 can be increased.

The printing unit 6 includes the elastic members 47 configured to urge the head support member 45 to the platen roller 50 side with respect to the head support member 45. The conducting member 80 is formed integrally with one of the elastic members 47. With this configuration, as compared to a case in which the conducting member is a member provided separately from an elastic member, the number of parts can be reduced. Further, through assembly of one of the elastic members 47 at a predetermined position, the conducting member 80 can also be assembled to the main body frame 10. Accordingly, as compared to the case in which the conducting member is a member provided separately from an elastic member, increase in the number of manufacturing steps can be suppressed. Therefore, increase in manufacturing cost can be suppressed.

The portable terminal 1 according to the first embodiment includes the printing unit 6 that has the motor fixing structure reduced in the number of parts, and thus is reduced in weight and manufacturing cost. Accordingly, a light and inexpensive portable terminal can be provided.

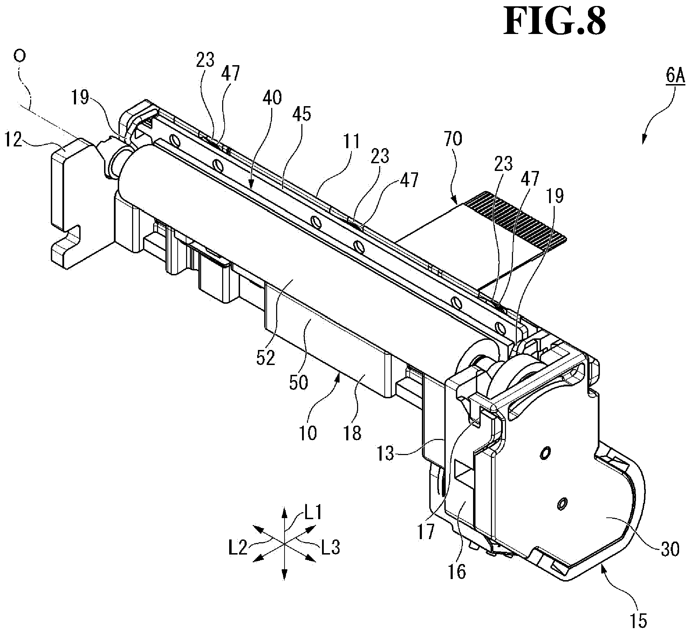

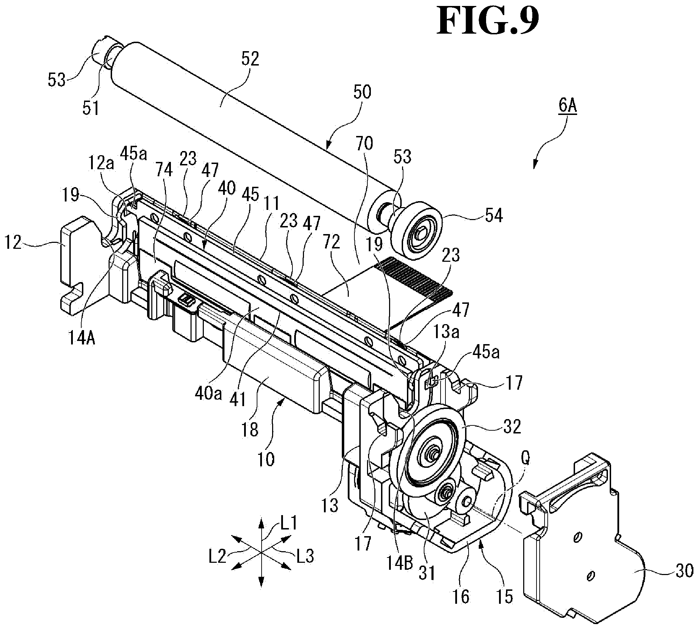

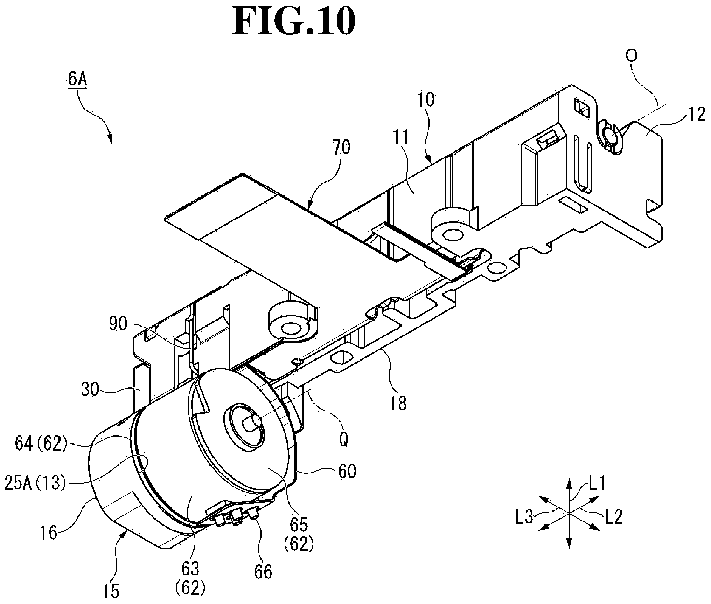

FIG. 8 and FIG. 10 are each a perspective view for illustrating a printing unit according to a second embodiment of the present invention. FIG. 9 is an exploded perspective view for illustrating the printing unit according to the second embodiment. The second embodiment is different from the first embodiment in that a conducting member 90 is arranged along an outer surface of the rear plate portion 11. The second embodiment is the same as the first embodiment except for a configuration to be described below.

As illustrated in FIG. 8 to FIG. 10, the second side wall portion 13 of the main body frame 10 includes a motor support portion 25A in place of the motor support portion 25 of the first embodiment. The motor support portion 25A is formed so as to be arranged on a side opposite to the platen roller 50 across the sheet guide portion 18 when viewed in the horizontal direction L2. The motor support portion 25A is formed below the rear plate portion 11 and the sheet guide portion 18 when viewed in the horizontal direction L2. The motor 60 is fixed to an inner surface of the motor support portion 25A in the horizontal direction L2. Accordingly, the motor 60 is arranged on the side opposite to the platen roller 50 across the sheet guide portion 18, and arranged below the rear plate portion 11. The motor 60 is fixed to the motor support portion 25A with an adhesive.

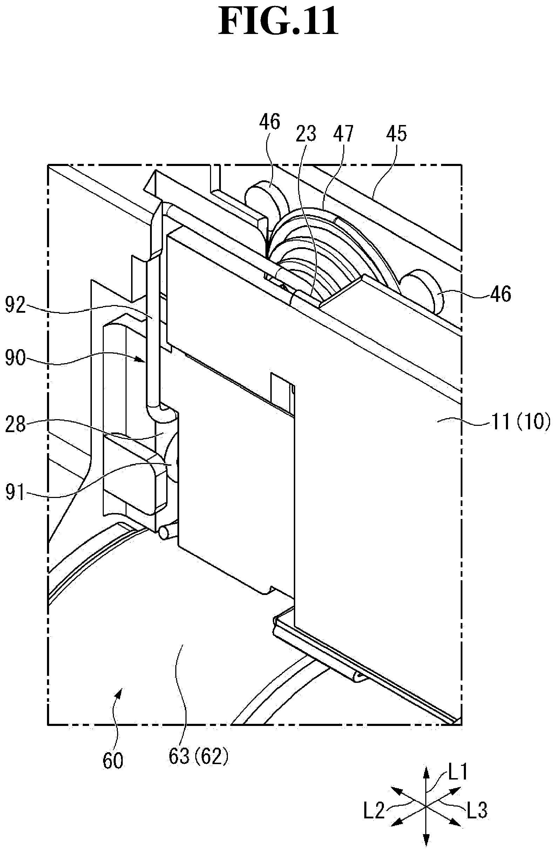

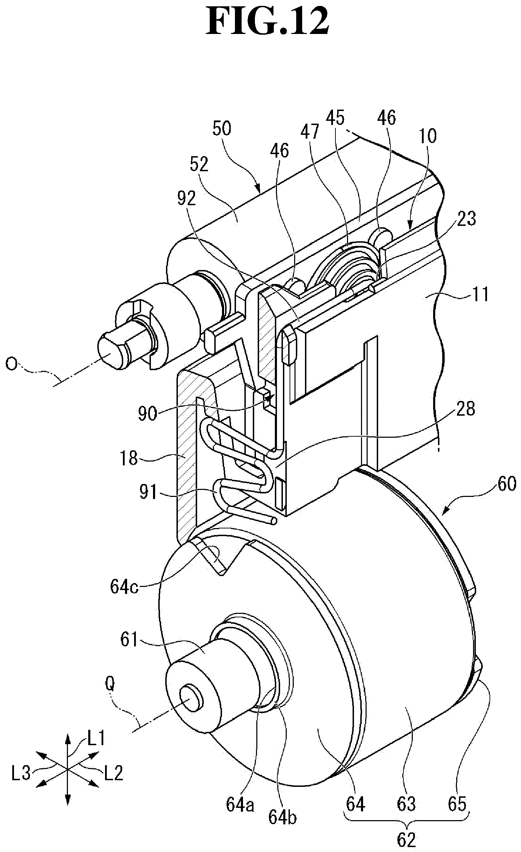

FIG. 11 is a perspective view for illustrating a part of the printing unit according to the second embodiment when viewed from an upper rear side thereof. FIG. 12 is a perspective view for illustrating a part of the printing unit according to the second embodiment when viewed from an upper rear side thereof. In FIG. 12, cross sections of some components, which are taken along the vertical direction L1 and the fore-and-aft direction L3, are illustrated. As illustrated in FIG. 11 and FIG. 12, a slit 28 is formed in the rear plate portion 11. The slit 28 passes through the rear plate portion 11 in the fore-and-aft direction L3, and extends upward from a position of a lower edge of the rear plate portion 11 that is opposed to the housing 62 of the motor 60. The slit 28 is opened toward the housing 62 of the motor 60.

A printing unit 6A includes the conducting member 90 in place of the conducting member 80. The conducting member 90 is mechanically connected to one of the elastic members 47, and is electrically connected to the head support member 45 via the one of the elastic members 47. In the second embodiment, the conducting member 90 is integrated with the one of the elastic members 47. The conducting member 90 is configured to be assemblable to the main body frame 10 at a predetermined position under a state in which the motor 60 is fixed to the main body frame 10 with the adhesive. The projecting portions 46 of the head support member 45 regulate upward movement of the one of the elastic members 47 mechanically connected to the conducting member 90, thereby preventing the conducting member 90 from falling out of the predetermined position at which the conducting member 90 is assembled to the main body frame 10.

The conducting member 90 includes a contact portion 91 and a coupling portion 92. The contact portion 91 is arranged in the slit 28. The coupling portion 92 is arranged along the outer surface of the rear plate portion 11, and is configured to couple the contact portion 91 and one of the elastic members 47 to each other. The coupling portion 92 is arranged along a rear surface of the rear plate portion 11. The coupling portion 92 is mechanically connected to the one of the elastic members 47 in the vicinity of the upper end opening of the recessed portion 23 of the rear plate portion 11. The coupling portion 92 extends leftward from a portion connected to the one of the elastic members 47 along the upper edge of the rear plate portion 11, and then extends downward toward the slit 28. The contact portion 91 is connected to a lower end portion of the coupling portion 92. The contact portion 91 as a whole extends in a direction orthogonal to the horizontal direction L2. The contact portion 91 extends downward from the lower end portion of the coupling portion 92 while meandering in the fore-and-aft direction L3, and is held in contact with the housing 62 of the motor 60. Accordingly, the contact portion 91 is elastically deformable in the vertical direction L1, and is arranged in a contracted state in the slit 28, to thereby be held in press contact with the housing 62 of the motor 60. As illustrated in FIG. 12, the contact portion 91 extends behind the rear plate portion 11 and astride the head support member 45 when viewed from the outer side in the horizontal direction L2. The contact portion 91 can be brought into contact with the head support member 45 from the outer side in the horizontal direction L2, and regulates displacement of the head support member 45.

As described above, in the printing unit 6A according to the second embodiment, similarly to the printing unit 6 according to the first embodiment, the motor 60 is fixed to the main body frame 10 with the adhesive. Therefore, the second embodiment provides the same operations and effects as those of the first embodiment.

Further, the printing unit 6A includes the projecting portions 46 configured to prevent falling of the conducting member 90. With this configuration, conduction between the housing 62 of the motor 60 and the head support member 45 of the thermal head 40 can be prevented from being cancelled along with falling of the conducting member 90. Therefore, reliability of the printing unit 6A can be increased.

Note that, the present invention is not limited to the embodiments described above with reference to the drawings, and various modification examples may be employed within the technical scope of the present invention as defined by the appended claims. For example, in the first embodiment described above, the bonding surface of the motor support portion 25 and the bonding surface of the motor 60 are each formed into a flat shape. However, an uneven shape such as a groove may be formed in at least any one of the bonding surface of the motor support portion and the bonding surface of the motor. With this configuration, the adhesion strength between the motor support portion and the motor can be increased.

Besides the above, components in the above-mentioned embodiments may be replaced by well-known components as appropriate without departing from the scope of the present invention as defined by the appended claims.

## Claims

1. A printing unit (6), comprising:
a platen roller (50) configured to convey a recording sheet (P);
a thermal head (40) configured to perform printing on the recording sheet (P) through press contact with an outer peripheral surface of the platen roller (50); and
a frame (10) configured to support the platen roller (50) in a rotatable manner, **characterized in that**:
the printing unit further comprises a motor (60) configured to rotate the platen roller (50) about a predetermined axis (O); and
the motor (60) is fixed to the frame (10) with an adhesive.

2. The printing unit (6) according to claim 1, wherein a viscosity of the adhesive is equal to or higher than 40 Pa·s and equal to or lower than 110 Pa·s in an environment at a temperature of 23°C and a humidity of 50%.

3. The printing unit (6) according to claim 1 or 2, wherein a hardness of the adhesive is equal to or higher than Shore A15 and equal to or lower than one of Shore A58 and Shore D60.

4. The printing unit (6) according to any one of claims 1 to 3, wherein a time period for forming a coating of the adhesive is equal to or longer than 4 minutes and equal to or shorter than 25 minutes.

5. The printing unit (6) according to any one of claims 1 to 4, further comprising:
a support member (45), which is supported on the frame (10), and includes the thermal head (40) fixed thereto; and
a conducting member (80), which is brought into contact with a housing (62) of the motor (60), and is configured to provide conduction between the housing (62) and the support member (45),
wherein the frame (10) and the conducting member (80) are configured to be assemblable to each other under the state in which the motor (60) is fixed to the frame (10) with the adhesive.

6. The printing unit (6) according to claim 5,
wherein between the frame (10) and the motor (60), the housing (62) defines a contact space (S) in which the conducting member (80) is to be arranged,
wherein in an assembly including the frame (10) and the support member (45), a communication portion (27) is formed, and is configured to linearly communicate the contact space (S) and an outside of the assembly with each other, and
wherein the conducting member (80) is inserted through the communication portion (27).

7. The printing unit (6) according to claim 5 or 6, further comprising a falling prevention portion (82) configured to prevent falling of the conducting member (80).

8. The printing unit (6) according to any one of claims 5 to 7, further comprising an elastic member (47) configured to urge the support member (45) to the platen roller (50) side with respect to the support member (45),
wherein the conducting member (80) is formed integrally with the elastic member (47).

9. A portable terminal (1), comprising the printing unit (6) of any one of claims 1 to 8.

## Patentansprüche

1. Druckeinheit (6), umfassend:
eine Schreibwalze (50), die eingerichtet ist, ein Aufzeichnungsblatt (P) zu befördern;
einen Thermokopf (40), der eingerichtet ist, Druck auf dem Aufzeichnungsblatt (P) durch Presskontakt mit einer äußeren Umfangsfläche der Schreibwalze (50) durchzuführen; und
ein Gestell (10), das eingerichtet ist, die Schreibwalze (50) drehbar zu halten, **dadurch gekennzeichnet, dass**:
die Druckeinheit weiter einen Motor (60) umfasst, der eingerichtet ist, die Schreibwalze (50) um eine vorbestimmte Achse (0) zu drehen; und
der Motor (60) an dem Gestell (10) mit einem Klebstoff befestigt ist.

2. Druckeinheit (6) nach Anspruch 1, wobei eine Viskosität des Klebstoffs gleich oder größer als 40 Pa·s und kleiner oder gleich 110 Pa·s in einer Umgebung bei einer Temperatur von 23°C und einer Feuchtigkeit von 50% ist.

3. Druckeinheit (6) nach Anspruch 1 oder 2, wobei eine Härte des Klebstoffs gleich oder größer als ShoreA15 und gleich oder kleiner als eine von Shore A58 und Shore D60 ist.

4. Druckeinheit (6) nach einem der Ansprüche 1 bis 3, wobei eine Zeitdauer zum Bilden einer Beschichtung des Klebstoffs gleich oder länger als 4 Minuten und gleich oder kürzer als 25 Minuten ist.

5. Druckeinheit (6) nach einem der Ansprüche 1 bis 4, weiter umfassend:
ein Trägerelement (45), das auf dem Gestell (10) getragen wird und den Thermokopf (40) daran befestigt enthält; und
ein leitendes Element (80), das mit einem Gehäuse (62) des Motors (60) in Kontakt gebracht wird und eingerichtet ist, Leitung zwischen dem Gehäuse (62) und dem Trägerelement (45) bereitzustellen,
wobei das Gestell (10) und das leitende Element (80) eingerichtet sind, in dem Zustand, in dem der Motor (60) mit dem Klebstoff an dem Gestell (10) befestigt ist, zusammengebaut werden zu können.

6. Druckeinheit (6) nach Anspruch 5,
wobei das Gehäuse (62) zwischen dem Gestell (10) und dem Motor (60) einen Kontaktraum (S) definiert, in dem das leitende Element (80) anzuordnen ist,
wobei in einer Baugruppe, die das Gestell (10) und das Trägerelement (45) enthält, ein Kommunikationsabschnitt (27) gebildet ist und eingerichtet ist, den Kontaktraum (S) und eine Außenseite der Baugruppe linear miteinander in Kommunikation zu bringen, und
wobei das leitende Element (80) durch den Kommunikationsabschnitt (27) eingesetzt wird.

7. Druckeinheit (6) nach Anspruch 5 oder 6, weiter umfassend einen Abschnitt (82) zum Verhindern eines Herunterfallens, der eingerichtet ist, ein Herunterfallen des leitenden Elements (80) zu verhindern.

8. Druckeinheit (6) nach einem der Ansprüche 5 bis 7, weiter umfassend ein elastisches Element (47), das eingerichtet ist, das Trägerelement (45) gegen die Seite der Schreibwalze (50) in Bezug auf das Trägerelement (45) zu drängen,
wobei das leitende Element (80) einstückig mit dem elastischen Element (47) gebildet ist.

9. Tragbares Endgerät (1), umfassend die Druckeinheit (6) nach einem der Ansprüche 1 bis 8.

## Revendications

1. Unité d'impression (6), comprenant :
un rouleau de platine (50) configuré pour transporter une feuille d'impression (P) ;
une tête thermique (40) configurée pour exécuter une impression sur la feuille d'impression (P) par contact par pression avec une surface périphérique extérieure du rouleau de platine (50) ; et
un cadre (10) configuré pour supporter le rouleau de platine (50) de façon rotative, **caractérisée en ce que** ;
l'unité d'impression comprend en outre un moteur (60) configuré pour faire tourner le rouleau de platine (50) autour d'un axe prédéterminé (O) ; et
le moteur (60) est fixé au cadre (10) à l'aide d'un adhésif.

2. Unité d'impression (6) selon la revendication 1, dans laquelle une viscosité de l'adhésif est égale ou supérieure à 40 Pa s et égale ou inférieure à 110 Pa s dans un environnement à une température de 23°C et une humidité de 50%.

3. Unité d'impression (6) selon la revendication 1 ou 2, dans laquelle une dureté de l'adhésif est égale ou supérieure à Shore A15 et égale ou inférieure à l'une parmi Shore A58 ou Shore D60.

4. Unité d'impression (6) selon l'une quelconque des revendications 1 à 3, dans laquelle une période de temps pour la formation d'un revêtement de l'adhésif est égale ou supérieure à 4 minutes et égale ou inférieure à 25 minutes.

5. Unité d'impression (6) selon l'une quelconque des revendications 1 à 4, comprenant en outre :
un élément de support (45) supporté sur le cadre (10) et incluant la tête thermique (40) fixée à celui-ci ; et
un élément conducteur (80) mis en contact avec un logement (62) du moteur (60) et configuré pour fournir une conduction entre le logement (62) et l'élément de support (45),
dans laquelle le cadre (10) et l'élément conducteur (80) sont configurés pour pouvoir être assemblés entre eux dans l'état dans lequel le moteur (60) est fixé au cadre (10) à l'aide de l'adhésif.

6. Unité d'impression (6) selon la revendication 5,
dans laquelle, entre le cadre (10) et le moteur (60), le logement (62) définit un espace de contact (S) dans lequel l'élément conducteur (80) doit être agencé,
dans laquelle, dans un assemblage incluant le cadre (10) et l'élément de support (45), une portion de communication (27) est formée et configurée pour faire communiquer linéairement l'espace de contact (S) avec un extérieur de l'assemblage, et
dans laquelle l'élément conducteur (80) est inséré à travers la portion de communication (27).

7. Unité d'impression (6) selon la revendication 5 ou 6, comprenant en outre une portion antichute (82) configurée pour empêcher la chute de l'élément conducteur (80).

8. Unité d'impression (6) selon l'une quelconque des revendications 5 à 7, comprenant en outre un élément élastique (47) configuré pour forcer l'élément de support (45) du côté du rouleau de platine (50) par rapport à l'élément de support (45),
dans laquelle l'élément conducteur (80) est formé intégralement avec l'élément élastique (47).

9. Terminal portable (1) comprenant l'unité d'impression (6) selon l'une quelconque des revendications 1 à 8.
